# EUROPÄISCHE PATENTSCHRIFT

(11) **EP 3 622 142 B1**
(45) Veröffentlichungstag und Bekanntmachung des Hinweises auf die Patenterteilung: **29.09.2021**
(21) Anmeldenummer: 18723660.9
(22) Anmeldetag: 17.04.2018
(51) Int. Cl.: E05D 5/08, F16B 12/24

(54) **DÜBEL ZUM BEFESTIGEN VON BESCHLAGTEILEN**
DOWEL FOR FASTENING FITTING PARTS
CHEVILLE POUR LA FIXATION DE PIÈCES DE FERRURE

(30) Priorität: 11.05.2017 AT 503992017
(43) Veröffentlichungstag der Anmeldung: 18.03.2020
(60) Teilanmeldung: 21187242.9
(73) Patentinhaber: Julius Blum GmbH, 6973 Höchst (AT)
(72) Erfinder: HAGSPIEL, Dominik, 6973 Höchst (AT)
(74) Vertreter: Torggler & Hofinger Patentanwälte
(86) Internationale Anmeldenummer: PCT/AT2018/000022
(87) Internationale Veröffentlichungsnummer: WO 2018/204941

(56) Entgegenhaltungen:
- WO-A1-2017/059471
- DE-U1-202015 105 329
- US-A- 5 246 322

## Beschreibung

Die Erfindung betrifft einen Dübel zum Befestigen von Beschlagteilen von Möbeln mit einer Dübelhülse, mindestens einer von der Dübelhülse gesonderten Befestigungskralle, einem axial in der Dübelhülse bewegbaren Spreizelement zum radialen Aufspreizen der mindestens einen Befestigungskralle und der Dübelhülse, wobei die Dübelhülse eine Führung aufweist, die einen Halteabschnitt der Befestigungskralle seitlich führt, und dass Rastmittel vorgesehen sind, die die in die Führung eingesetzte Befestigungskralle an der Dübelhülse halten.

Weiters betrifft die Erfindung einen Beschlagteil für ein Möbel mit einem solchen Dübel sowie ein mit einem solchen Beschlagteil ausgestattetes Möbel. Schließlich betrifft die Erfindung auch ein Verfahren zum Herstellen eines Dübels.

Dübel sind in der Möbelindustrie bekannt, um in vorgebohrte Aufnahmen eingesetzt zu werden und darin durch Aufspreizen mittels eines Zugelementes, das sich an einem Beschlagteil abstützt, aufgespreizt zu werden und somit im Möbelteil festzuhalten. Letztlich erzielt man damit eine feste Verbindung eines Beschlagteiles mit einem Möbelteil. Das Zugelement ist häufig eine Schraube mit beliebig ausgestaltetem Schraubenkopf, beispielsweise einem Kreuzschraubenkopf, einem Inbusschraubenkopf, einem Torx-Schraubenkopf oder dergleichen. Durch Andrehen der Schraube wird das Spreizelement des Dübels angezogen und der Dübel verspreizt sich in radialer Richtung in der Bohrung.

US 5 246 322 A offenbart einen gattungsgemäßen Dübel und ein entsprechendes Verfahren zur Herstellung eines Dübels.

Aufgabe der Erfindung ist es, einen Dübel der eingangs genannten Gattung bereitzustellen, der in unterschiedlichen Materialien einen guten Halt findet und der sich durch geringe Abmessungen, insbesondere eine geringe Länge (gemessen in Einsetzrichtung), auszeichnet und damit auch bei dünnwandigen Möbelmaterialien einsetzbar ist.

Erfindungsgemäß wird dies durch die Merkmale des Anspruchs 1 erreicht. Zum selben Zweck dient ein Beschlagteil für ein Möbel mit den Merkmalen des Anspruchs 10 bzw. ein Möbel mit den Merkmalen des Anspruchs 12.

Gemäß einem weiteren Aspekt der Erfindung wird der erfindungsgemäße Dübel durch ein Verfahren gemäß Anspruch 13 hergestellt.

Beim erfindungsgemäßen Dübel lässt sich die Befestigungskralle, am besten von der dem Beschlagteil abgewandten Unterseite des Dübels ins Innere der Dübelhülse einsetzen, wobei die Führung eine seitliche Zentrierung der eingesetzten Befestigungskralle vornimmt. Eine einfache Verbindung über Rastmittel lässt dann die Befestigungskralle einschnappen und auf einfache Weise, vorzugsweise mit Spiel für eine spätere Bewegung beim Anziehen, mit der Dübelhülse verbinden. Durch einfache Führungen, insbesondere in Form von Vorsprüngen an der Innenseite der Dübelhülse und durch Rastzapfen, die vom Inneren der Dübelhülse abstehen und in korrespondierende Rastöffnungen in einem Halteabschnitt der Befestigungskralle einrasten, lässt sich auf einfache Weise mit wenigen Bauteilen eine kompakte Bauweise des Dübels erzielen.

Besonders bevorzugt ist eine Ausführungsform, bei der zumindest zwei, vorzugsweise vier paarweise gegenüberliegende Befestigungskrallen vorgesehen sind, wobei es günstig ist, wenn die Dübelhülse für jede Befestigungskralle eine eigene gesonderte Führung sowie eigene gesonderte Rastmittel aufweist. Damit sind die einzelnen Befestigungskrallen im Wesentlichen unabhängig, um gesondert voneinander mit der Dübelhülse verbindbar. Durch vier Befestigungskrallen lässt sich eine gute umfangsmäßige Verteilung der Befestigungskrallen über den gesamten Umfang der Dübelhülse erzielen.

Eine bevorzugte Variante der Erfindung ist durch die Merkmale des Anspruchs 4 gekennzeichnet Bei dieser Variante ist das Spreizelement lediglich indirekt mit der Dübelhülse, nämlich über die Befestigungskrallen, befestigt, die ihrerseits mit der Dübelhülse verrastet sind. Bei dieser Variante erfüllen die Befestigungskrallen eine Doppelfunktion. Sie sind einerseits an der Dübelhülse verrastet und beweglich gelagert und können beim Aufspreizen entweder selbst im Material der Bohrung eingreifen oder die Dübelhülse radial nach außen drücken, sodass diese mit ihren Vorsprüngen oder Rippen im Material der Bohrung hält. Andererseits dienen die Befestigungskrallen gleichzeitig auch als Halterung für das Spreizelement, das seinerseits über ein nicht zum Dübel gehörendes Zugelement, beispielsweise eine Schraube oder einen Zugmechanismus über einen Exzenter, bewegbar ist. Durch diese Bauweise lässt sich mit wenigen Bauteilen ein kostengünstiger und in den Abmessungen kompakter Dübel herstellen, der sich auch zum Einsetzen in dünne Platten bzw. Materialien, insbesondere eines Möbels, eignet. Diese Platten müssen lediglich eine Dicke von etwas mehr als 5 mm bis 8 mm, vorzugsweise von etwas mehr als 6 mm, aufweisen, weil mit dem erfindungsgemäßen Dübel Abmessungen erzielbar sind, bei denen der nicht gespreizte Dübel eine in Einsetzrichtung gemessene Länge von 5 mm bis 8 mm, vorzugsweise von etwa 6 mm, aufweist. Durch die erfindungsgemäße Konstruktion lässt sich ein Dübel realisieren, bei dem die Länge (wiederum in Einsetzrichtung in die Bohrung gemessen) kleiner ist als der Durchmesser, vorzugsweise sogar kleiner als 70% des Durchmessers.

Die Erfindung betrifft auch ein Beschlagteil für ein Möbel, das mit einem solchen Dübel ausgestattet ist, wobei der Dübel samt Zugvorrichtung, beispielsweise eine Schraube, am Beschlagteil vormontiert sein kann. Damit werden lose Teile vermieden, was insbesondere von Vorteil ist, weil der Dübel gemäß der Erfindung sehr kleine Abmessungen, jedenfalls im Bereich von weit unter 1 cm, aufweist. Meist wird der Beschlagteil zwei oder mehrere Dübel aufweisen, die in vorgefertigte Bohrungen die in den richtigen Abständen gemäß einem vorgegebenen Bohrlochbild passen. Damit muss man den Beschlagteil nur mehr an dem Möbelteil, beispielsweise eine Türe, Klappe oder Schublade oder einem Möbelkorpus ansetzen, die Dübel in die Bohrung drücken und dann durch Anziehen des Zugmittels aufspreizen, womit der Beschlagteil fest am Möbelteil hält.

Damit sich der Dübel bei Verwendung einer Schraube als Zugelement nicht mitdreht, kann gemäß einer bevorzugten Ausführungsform vorgesehen sein, dass der Beschlag zumindest eine nicht-rotationssymmetrische Ausnehmung aufweist, durch die das Zugelement verläuft und in die neben dem Zugelement zumindest ein Verdrehsicherungszapfen eingreift.

Die Erfindung betrifft auch ein Verfahren zum Herstellen eines Dübels gemäß Anspruch 13 und bevorzugt gemäß Anspruch 14. Beim geschilderten Verfahren lassen sich in eine vorzugsweise einstückige Dübelhülse aus Kunststoff mehrere Befestigungskrallen zeitlich hintereinander einsetzen und verrasten. Diese Befestigungskrallen bestehen vorzugsweise aus Metall.

Anschließend kann man dann in die Kombination aus Dübelhülse und Befestigungskrallen ein Spreizelement einsetzen, das sich wiederum mit den Befestigungskrallen verrastet. Insgesamt braucht man damit nicht mehr Bauteile als die geschilderten Bauteile. Bei vier Befestigungskrallen kommt man also mit insgesamt sechs Bauteilen aus: der Dübelhülse, den vier Befestigungskrallen und dem Spreizelement. Es bedarf keiner weiterer gesonderten Achsen oder Verbindungselemente.

Weitere Einzelheiten der Erfindung werden anhand der nachfolgenden Figurenbeschreibung näher erläutert:
- Fig. 1: zeigt eine Explosionsdarstellung eines Ausführungsbeispiels eines erfindungsgemäßen Dübels samt einem bevorzugten Zugelement in Form einer Schraube,
- Fig. 2b: zeigt in einer Draufsicht ein Ausführungsbeispiel eines erfindungsgemäßen Dübels mit einer Verdrehsicherung in einem ersten Herstellungsschritt, bei dem lediglich eine Befestigungskralle eingesetzt ist,

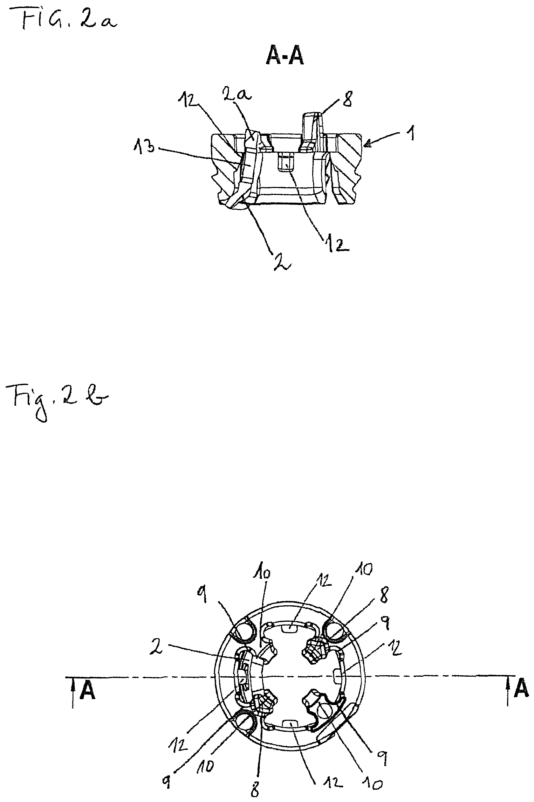

- Fig. 2a: zeigt einen entsprechenden Schnitt gemäß der Linie A-A der Fig. 2b,

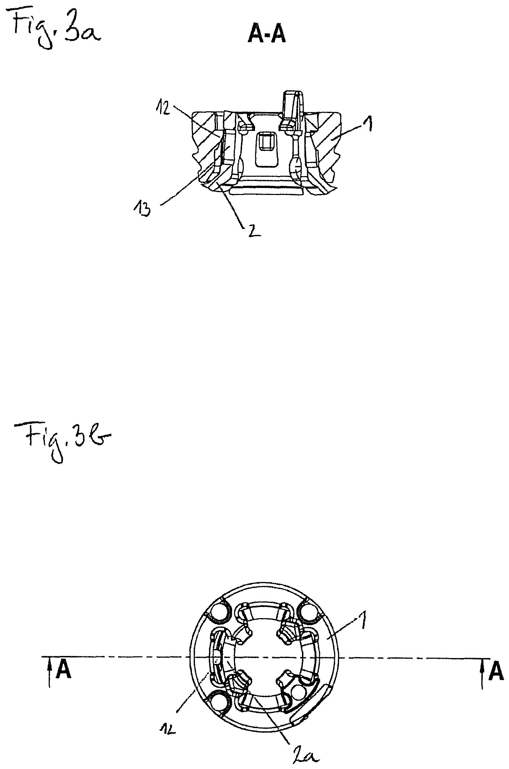

- Fig. 3a, 3b: zeigen dieselben Darstellungstypen wie Fig. 2a, 2b wobei jedoch das Aufschnappen der Befestigungskralle durch Verschwenken entgegen dem Uhrzeigersinn auf ein Rastmittel in der Dübelhülse weiter fortgeschritten ist. Außerdem zeigen die Fig. 3a, 3b bereits drei weitere vollständig eingeschnappte Befestigungskrallen,

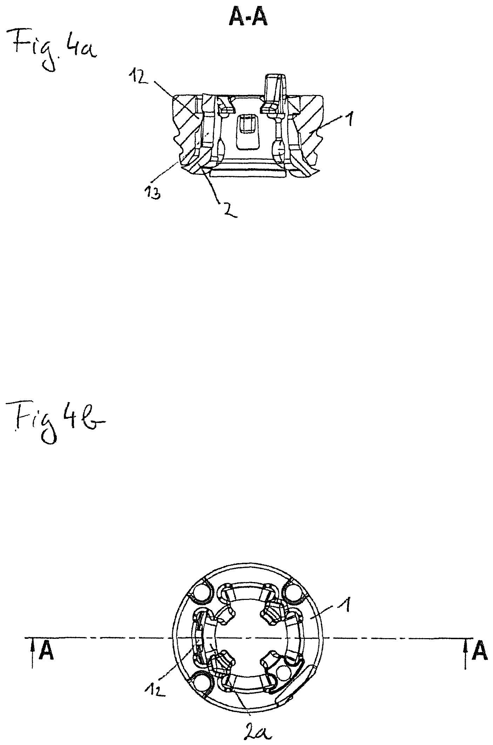

- Fig. 4a, 4b: gemäß diesen Figuren ist die linke Befestigungskralle weiter aufgeschnappt,

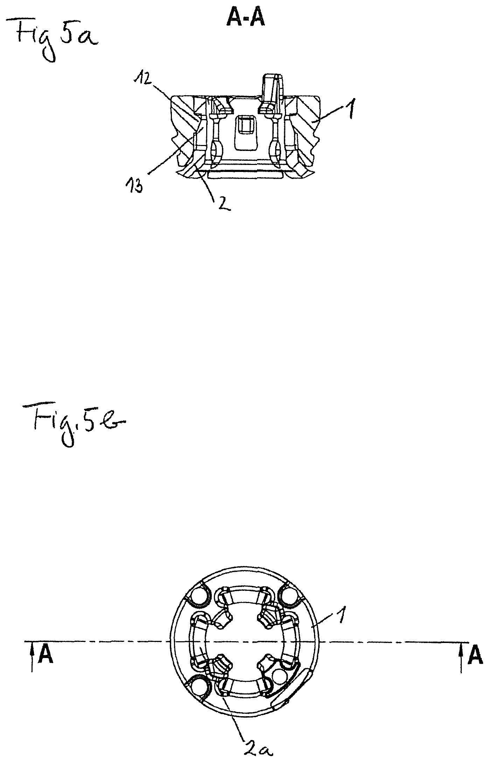

- Fig. 5a, 5b: gemäß diesen Figuren ist die linke Befestigungskralle vollständig aufgeschnappt und damit alle vier Befestigungskrallen in der Dübelhülse eingeschnappt,

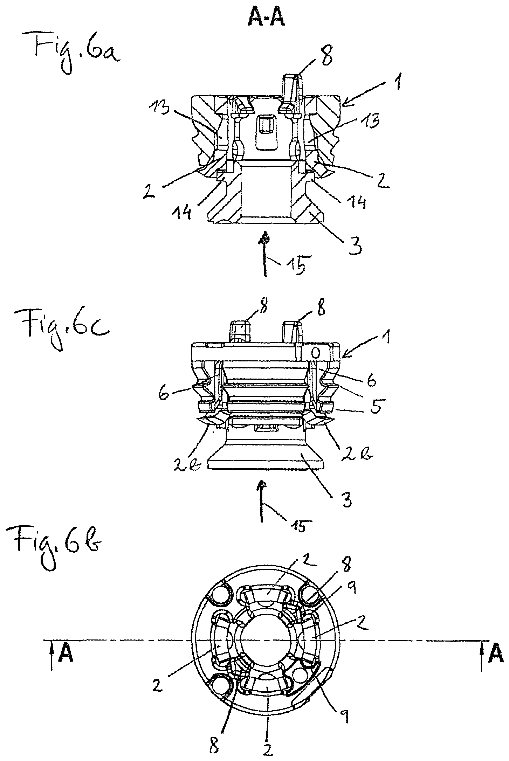

- Fig. 6a-6c: zeigen jeweils in einer Schnittdarstellung, einer Draufsicht und in einer Seitenansicht das Einsetzen des Spreizelementes in die mit bereits vier Befestigungskrallen ausgestattete Dübelhülse,

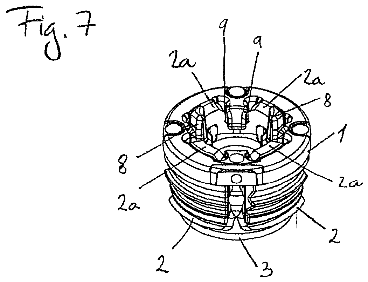

- Fig. 7: zeigt den fertigen Dübel gemäß den vorhergehenden Ausführungsbeispielen in einer perspektivischen Ansicht,

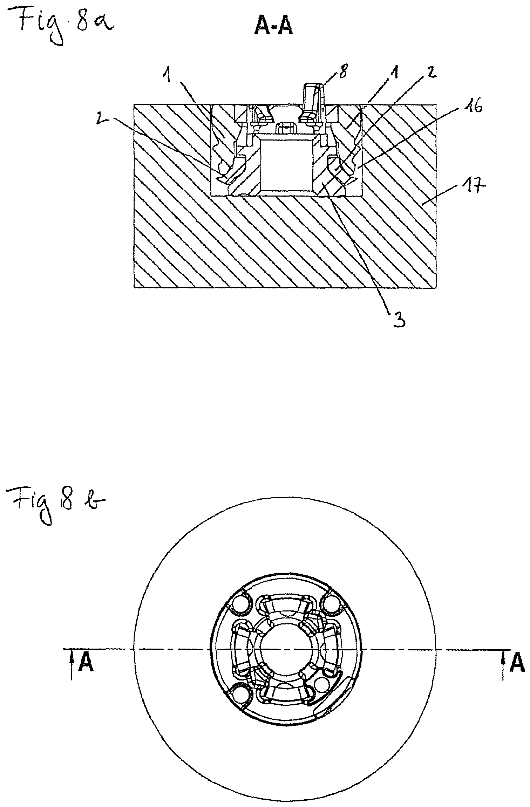

- Fig. 8a, 8b: zeigen in einer Schnittdarstellung und in einer Draufsicht den Dübel gemäß Fig. 7 in einer Bohrung eines Möbelteiles bzw. einer Platte eingesetzt, wobei der Dübel noch nicht aufgespreizt ist,

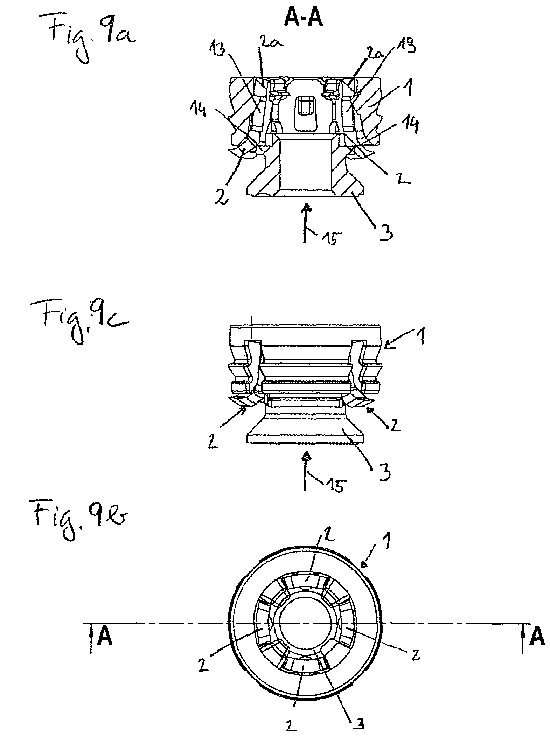

- Fig. 9a-9c: zeigen in einer Schnittdarstellung, in einer Draufsicht und einer Seitenansicht jeweils das Einsetzen eines Spreizelementes in eine mit bereits vier Befestigungskrallen versehenen Dübelhülse bei einem Ausführungsbeispiel ohne Verdrehsicherung,

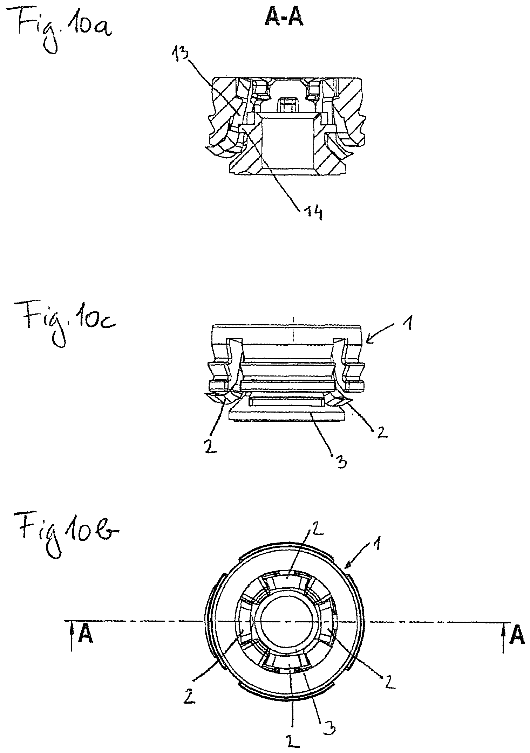

- Fig. 10a-10c: zeigen den Einsetzvorgang zu einem späteren Zeitpunkt; rechts ist das Spreizelement bereits in die rechte Befestigungskralle eingerastet, links findet dieses Einrasten in die Befestigungskralle gerade statt,

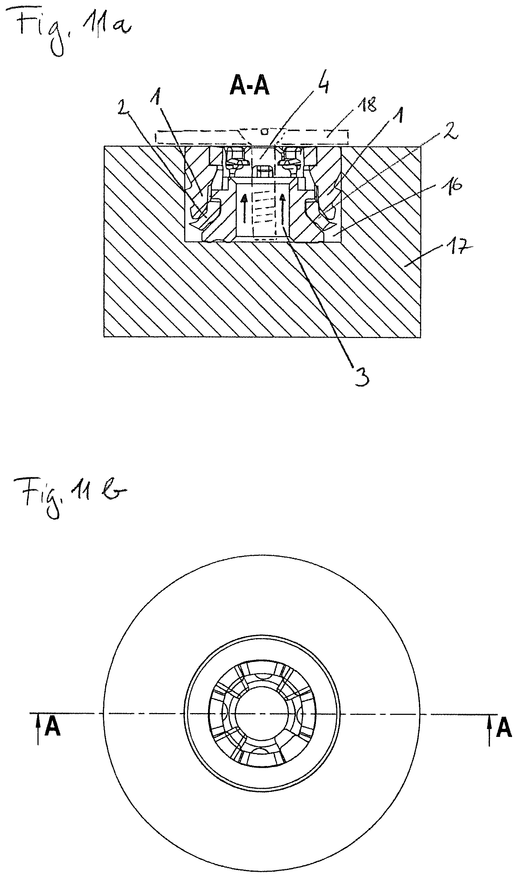

- Fig. 11a, 11b: zeigen in einer Schnittdarstellung und einer Draufsicht einen Dübel ohne Verdrehsicherung in eine Bohrung eines Möbelteiles bzw. einer Platte eingesetzt (im noch nicht aufgespreizten Zustand),

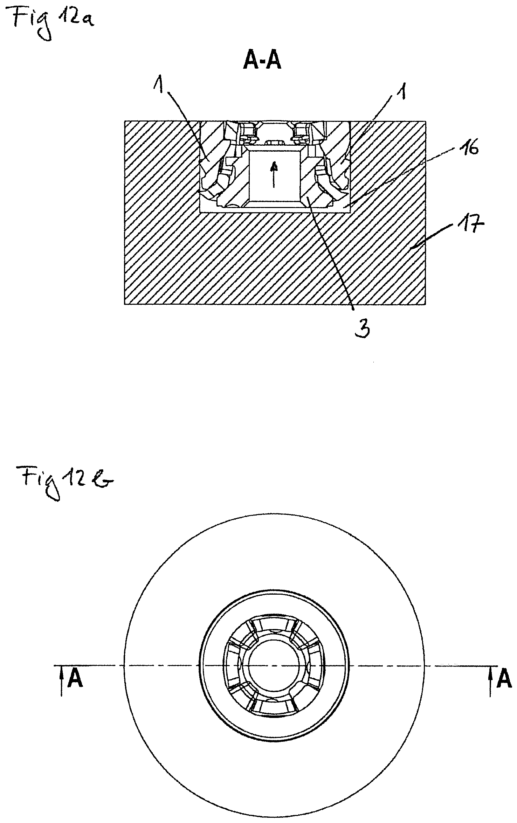

- Fig. 12a, 12b: zeigen dieselbe Darstellung im aufgespreizten Zustand bei Vorliegen eines harten Materials, beispielsweise Stein oder Hartholz,

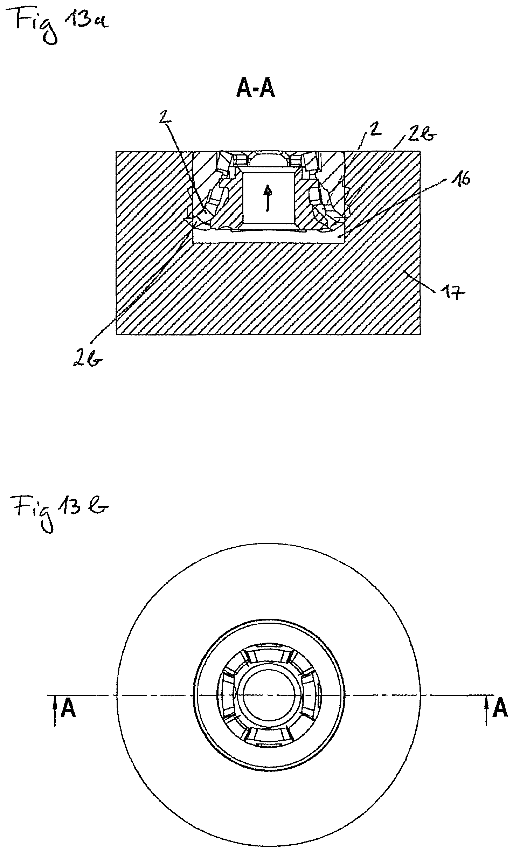

- Fig. 13a, 13b: zeigen entsprechende Darstellungen mit einem breiteren Aufspreizen bei einem weicheren Material, wie beispielsweise Weichholz oder Spanplatten,

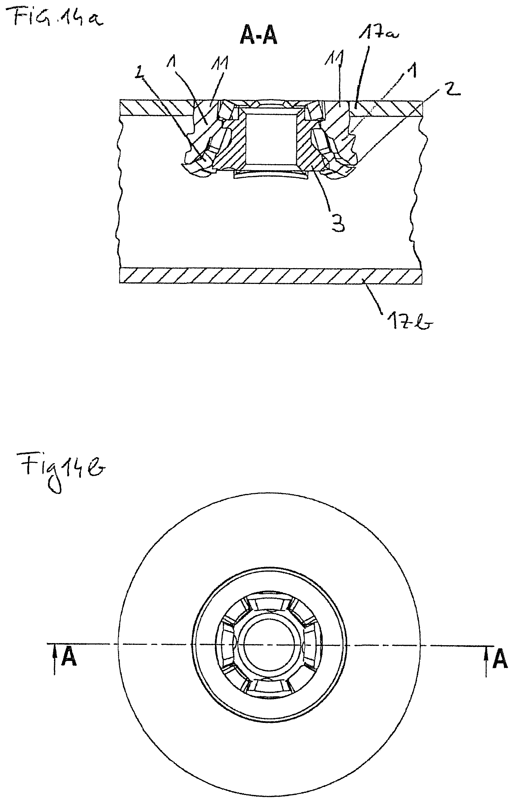

- Fig. 14a, 14b: zeigen entsprechende Darstellungen bei einer Leichtbauplatte mit maximal aufgespreiztem Dübel,

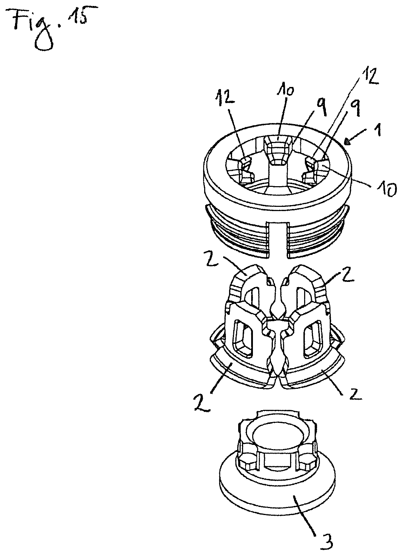

- Fig. 15: zeigt ein weiteres Ausführungsbeispiel eines Dübels mit einer anders gestalteten Führung in einer schematischen Explosionsdarstellung,

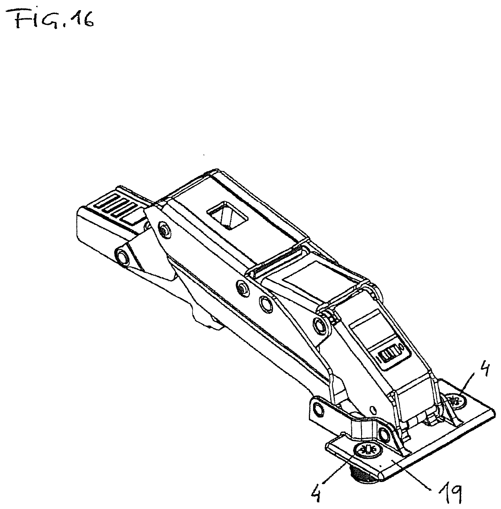

- Fig. 16: zeigt eine perspektivische Ansicht eines Beschlagteiles in Form eines Scharniers mit zwei vormontierten Dübeln,

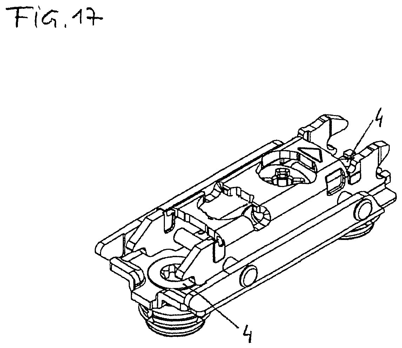

- Fig. 17: zeigt in einer perspektivischen Darstellung die Grundplatte eines Scharniers mit zwei vormontierten Dübeln,

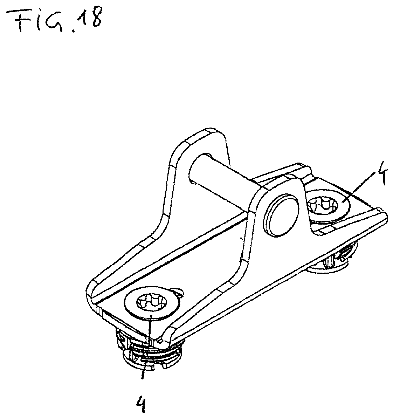

- Fig. 18: zeigt einen Frontwandhalter einer Schublade mit zwei vormontierten Dübeln,

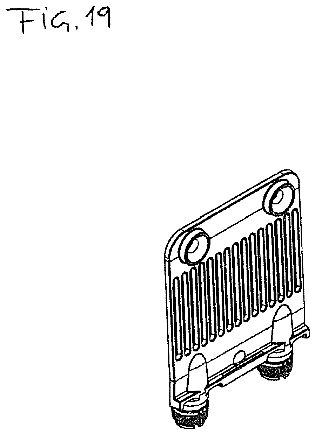

- Fig. 19: zeigt eine Einrichtung zur Blendenstabilisierung mit zwei vormontierten Dübeln,

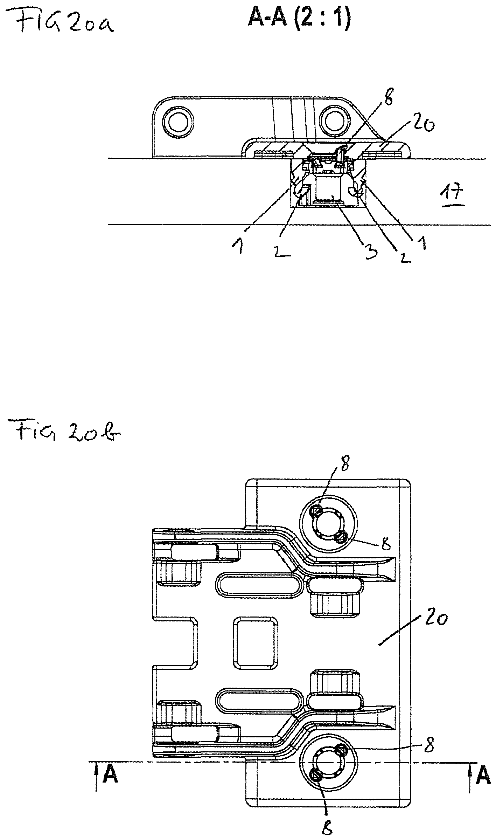

- Fig. 20a, 20b: zeigen in einer Schnittdarstellung bzw. einer Draufsicht eine Anschlussplatte eines Scharniers mit zwei darunter angebrachten Dübeln mit einer Verdrehsicherung,

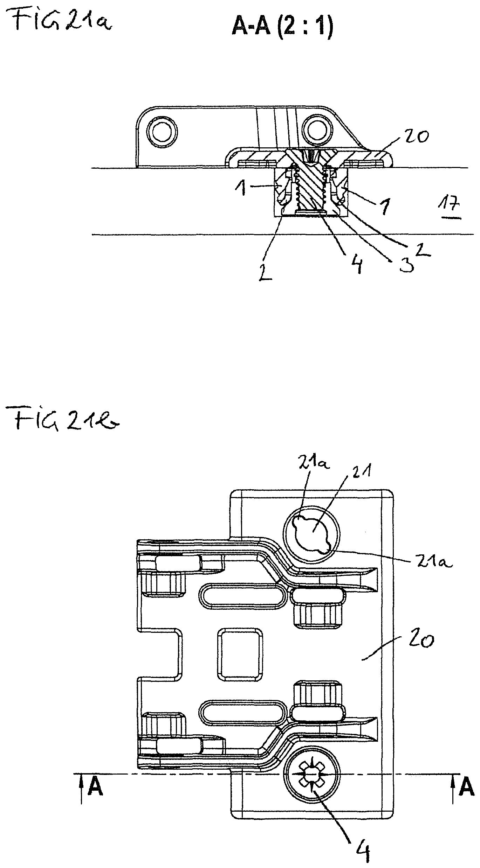

- Fig. 21a, 21b: zeigen in einer Schnittdarstellung und einer Draufsicht ebenfalls die Anschlussplatte eines Scharniers mit nur einem vormontierten Dübel samt als Schraube ausgeführten Zugmittel im nicht aufgespreizten Zustand, und

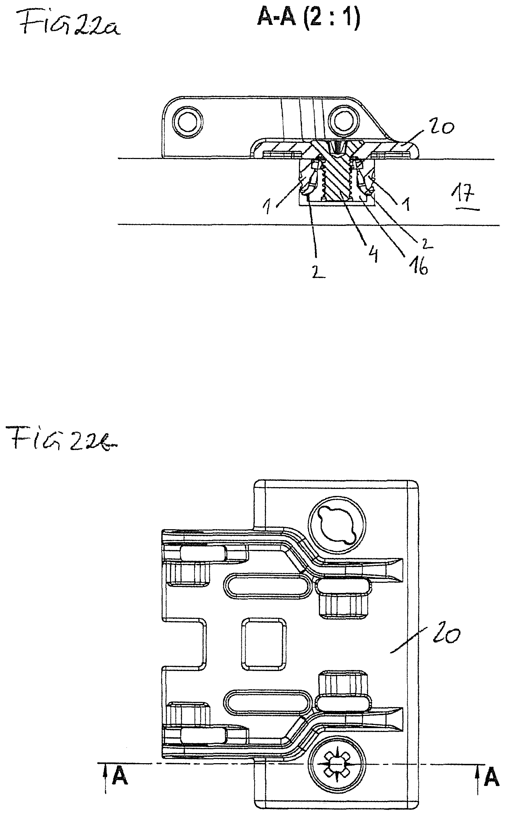

- Fig. 22a, 22b: zeigen dieselben Darstellungen wie 21a, 21b, jedoch im aufgespreizten Zustand des Dübels.

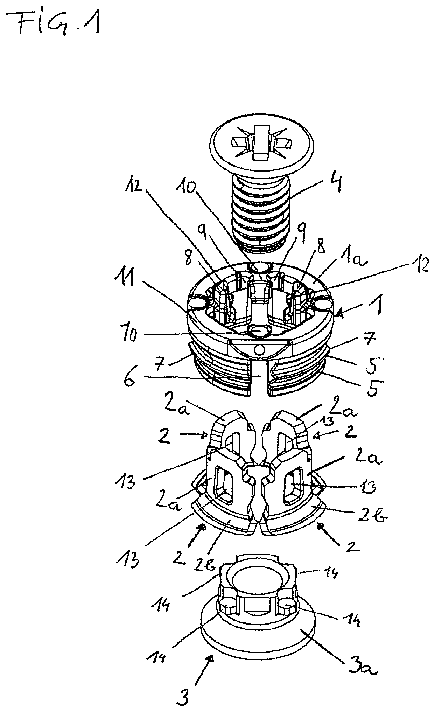

Der in Fig. 1 gezeigte Dübel besteht aus sechs Teilen, nämlich der Dübelhülse 1, den vier Befestigungskrallen 2 und dem Spreizelement 3. Zusätzlich ist in Fig. 1 noch eine Schraube 4 dargestellt, die in ein Innengewinde des Spreizelementes 3 eingreift und damit als Zugelement dieses Spreizelement 3 nach oben zieht und damit den Dübel aufspreizt, was später noch genauer erläutert wird.

Die Dübelhülse 1 besteht vorzugsweise aus Kunststoff, insbesondere aus einem Spritzgussbauteil. Damit lassen sich kompliziertere Formen, wie die später beschriebenen Rastmittelführungen und Verdrehsicherungen, einstückig ausbilden.

Außerdem bietet der Kunststoff aufgrund der relativ weichen Materialeigenschaften einen guten Halt in einer Bohrung aus hartem Material, wenn die äußeren Haltevorsprünge 5 dort satt anliegen.

Die Befestigungskrallen 2 sind aus Metall ausgeführt, wobei durch die gleichartige Ausbildung aller vier Befestigungskrallen 2 die Lagerhaltung minimiert und die Herstellung erleichtert ist. Metall erlaubt insbesondere die Ausbildung von scharfkantig vorstehenden Schneideabschnitten 2b, die bei aufgespreiztem Dübel besonders gut in weiche Materialien eindringen können und dort einen sicheren Halt gewähren.

Auch das Spreizelement 3 besteht vorzugsweise aus Metall und ist ebenfalls einstückig ausgebildet. Es weist eine konische bzw. kegelförmige Fläche 3a auf, die bei einem axialen Anziehen des Spreizelementes durch das Zugelement 4 (Schraube) innen an den Befestigungskrallen 2 anliegt und diese radial nach außen drückt. Bei einem fortgesetzten Nachaußendrücken der Befestigungskrallen 2 nehmen diese dann die durch Spalte 6 getrennten Haltelappen 7 der Dübelhülse 1 radial nach außen mit, womit sich auch insgesamt die Dübelhülse 1 aufspreizt.

Die Dübelhülse 1 gemäß Fig. 1 weist eine Verdrehsicherung in Form von zwei über die Oberseite 1a vorstehende Zapfen 8 auf, die im Folgenden näher erläutert werden.

Im Inneren weist die Dübelhülse 1 jeweils eine Führung 9 für jede Befestigungskralle 2 auf. Diese Führung 9 wird durch nach innen weisende Vorsprünge 10 gebildet, die einen hinterschnittenen Abschnitt definieren, in die die Halteabschnitte 2a der Befestigungskrallen 2 eingesetzt werden können, wobei in den hinterschnittenen Bereichen der Dübelhülse 1 die Führungen 9 die Halteabschnitte 2a der Befestigungskralle 2 jeweils C-förmig umgreifen, und zwar lediglich im oberen Bereich der Dübelhülse 1, wo diese einen durchgehenden Ring 11 aufweist. Beim in Fig. 1 dargestellten Ausführungsbeispiel sind also die eingesetzten Befestigungskrallen 2 oben auf der Höhe des Ringes innen in Führungen 9 jeweils seitlich in der Dübelhülse 1 gehalten.

Der Halt gegen Herausfallen der Befestigungskrallen 2 aus der Dübelhülse 1 erfolgt dann durch Rastmittel, die in der Dübelhülse 1 nach innen vorstehende Rastzapfen 12 umfasst (vier an der Zahl), die jeweils in korrespondierende Rastöffnungen 13 in den Halteabschnitten 2a der Befestigungskrallen 2 eingreifen.

Bei von unten eingesetztem Spreizelement 3 verrastet dieses Spreizelement 3 ebenfalls über eine Rastverbindung mit den vier Befestigungskrallen 2, wobei diese Rastverbindung radial abstehende Rastvorsprünge 14 am Spreizelement 3 vorsieht, die jeweils in die Rastöffnungen 13 der Befestigungskrallen 2 eingreifen. Damit greifen insgesamt bei jeder Befestigungskralle 2 zwei Bauteile ein, einmal von außen die Rastzapfen der Dübelhülse 1 und einmal von innen die Rastvorsprünge 14 des Spreizelementes 3. Bei eingesetztem Spreizelement 3 können dann die Befestigungskrallen 2 nicht mehr weiter nach innen schwenken und damit nicht mehr aus dem Rastzapfen 12 ausrasten. Eine gewisse Beweglichkeit der Befestigungskrallen 2 gegenüber der Dübelhülse 1 bleibt aber gegeben - einerseits durch ein Spiel in den seitlichen Führungen 9 und andererseits durch ein Spiel in der Rastmittelverbindung (Rastzapfen 12 in Rastöffnung 13). Auch die mit Spiel eingesetzten Rastvorsprünge 14 des Spreizelementes 3 lassen eine relative Beweglichkeit des Spreizelementes 3 gegenüber den Befestigungskrallen 2 zu.

Die Figuren 2a und 2b zeigen einen ersten Schritt zum Herstellen eines Ausführungsbeispiels eines erfindungsgemäßen Dübels, bei dem eine der vier Befestigungskrallen 2 eingesetzt aber noch nicht verrastet ist. Wie Fig. 2a zeigt, wird die Befestigungskralle 2 leicht schräg von unten eingeführt und dann anschließend, wie die Figuren 3a und 3b, 4a und 4b sowie 5a und 5b zeigen, im Gegen-Uhrzeigersinn verschwenkt, womit der obere Bereich des Halteabschnittes oben im Bereich des Ringes 11 der Dübelhülse 1 in die leicht hinterschnittenen Führungen 9 eindringt und der Dübelhülsen-seitige Rastzapfen 12 in die Rastöffnung 13 der Befestigungskralle 2 eindringt.

Die übrigen drei der insgesamt vier Befestigungskrallen 2 werden bevorzugt zeitlich hintereinander so eingeführt und verrastet, wie dies anhand der linken Befestigungskralle 2 in den Figuren 2a und 2b, 3a und 3b, 4a und 4b sowie 5a und 5b gezeigt ist. In den Figuren 3a, 3b, 4a, 4b und 5a, 5b sind die übrigen drei Befestigungskrallen 2 bereits im fertig montierten Zustand gezeigt. Wie bereits erwähnt, erfolgt aber vorzugsweise die Befestigung der Krallen hintereinander in einzelnen Schritten.

Wie die Figuren 6a bis 6c zeigen, wird anschließend das Spreizelement 3 von unten in Pfeilrichtung 15 in die bereits mit den vier Befestigungskrallen 2 versehene Dübelhülse 1 eingeschoben. Anschließend verrasten die Rastvorsprünge 14 des Spreizelementes 3 in den Rastöffnungen 13 der Befestigungskrallen 2, wobei die Befestigungskrallen 2 zunächst auseinandergedrückt werden und dann wieder zurückschnappen, wenn die Rastvorsprünge 14 die Rastöffnung 13 erreicht haben.

Schließlich gelangt man zum fertigen Dübel gemäß Fig. 7, der sich durch wenige Bauteile und eine kompakte Bauweise auszeichnet. Die Außenabmessungen des Dübels sind im Wesentlichen zylindrisch. Der in Fig. 7 nicht gespreizte Dübel weist vorteilhaft einen Durchmesser von 8mm bis 15 mm, vorzugsweise von etwa 10 mm auf.

Die in Einsetzrichtung gemessene Länge beträgt vorzugsweise 5 mm bis 8 mm und besonders bevorzugt etwa 6 mm. Damit lässt sich der Dübel auch in sehr dünne Platten bzw. Möbelteile einsetzen, die nur geringe Tiefen der Bohrungen zulassen. Dennoch ist durch den doppelten Halt über die auseinandergespreizte Dübelhülse 1 einerseits und die Schneidkanten der Befestigungskrallen 2 andererseits ein hervorragender Halt in Materialien unterschiedlichster Ausgestaltung und Härte gegeben. Die Befestigungskrallen 2 liegen innen an der Dübelhülse 1 an und erstrecken sich vorzugsweise mindestens über die gesamte Länge der Dübelhülse 1.

Die Figuren 8a und 8b zeigen ein Ausführungsbeispiel eines mit einer Verdrehsicherung versehenen Dübels, der in eine Bohrung 16 einer Platte bzw. eines Möbelteils 17 eingesetzt ist (ungespreizter Zustand). Durch Anziehen des Spreizelementes 3 nach oben werden die Befestigungskralle 2 sowie die Dübelhülse 1 radial nach außen gedrückt, wie die später anhand der Figuren 11a und folgende noch näher erläutert werden wird.

Zunächst wird aber anhand eines Ausführungsbeispiels ohne Verdrehsicherung nochmals das Einsetzen des Spreizelementes 3 in die Dübelhülse 1 gezeigt, in die bereits vier Befestigungskrallen 2 eingesetzt sind. Durch Hochschieben des Spreizelementes 3 in Richtung des Pfeiles 15 werden die Befestigungskrallen 2 zunächst seitlich auseinandergedrückt, wie dies anhand der linken Befestigungskralle 2 in Fig. 9a dargestellt ist. Anschließend schnappen diese zurück und die Rastvorsprünge 14 rasten in die Rastöffnungen 13 der Halteabschnitte 2a der Befestigungskrallen 2 ein, wie dies die Figuren 10a, 10b und 10c zeigen.

In Fig. 11 ist ein Dübel ohne Verdrehsicherung in eine Bohrung 16 einer Platte bzw. eines Möbelteils 17 eingesetzt. Mit strichlierten Linien ist ein Beschlagteil - beispielsweise eine Halteplatte eines Scharniers - angedeutet und mit dem Bezugszeichen 18 versehen. Ein Zugelement in Form einer Schraube 4 liegt mit dem Kopf am Beschlagteil 18 an und läuft unten in einem Gewinde in Spreizelement 3. Durch Anziehen der Schraube 4 wird das Spreizelement 3 in Pfeilrichtung hochgezogen und drückt dabei zunächst die vier Befestigungskrallen 2 radial nach außen, die anschließend auch die aus Kunststoff bestehende, elastische Dübelhülse 1 mit nach außen mitnehmen, womit es zu einer Verspreizung und Befestigung des Dübels innerhalb der Bohrung 16 kommt, wie dies die Figuren 12a, 12b darstellen. Dort handelt es sich um ein relativ hartes Material der Platte 17 bzw. des entsprechenden Möbelteiles, beispielsweise Kunststoffstein oder Hartholz. Halt wird hier vorwiegend über die weiche Dübelhülse 1 erzielt, die klemmend an der Innenseite der Bohrung 16 hält.

In den Figuren 12a, 13a und 14a ist übrigens aus Gründen der Einfachkeit die Schraube 4 samt Beschlagteil 18 nicht mehr dargestellt. Die Elemente sind natürlich vorhanden, um das Spreizelement 3 nach oben zu ziehen.

In Figuren 13a und 13b sind die Verhältnisse gezeigt, die vorliegen, wenn das Material der Platte bzw. des Möbelteiles weicher ist, beispielsweise eine Spanplatte oder Weichholz. Dann dringen zumindest auf einer Seite die Schneideabschnitt 2b der Befestigungskrallen 2 in das Material ein und führen zu einem sicheren Halt des Dübels.

In den Figuren 14a und 14b ist die Situation bei Leichtbauplatten gezeigt. Hier ist der Dübel maximal aufgespreizt, d. h. das Spreizelement 3 am weitesten nach oben gezogen. Die Befestigungskrallen 2 selbst und das untere Ende der Dübelhülse 1 liegen im freien Raum innerhalb der Leichtbauplatte, die zwei festeren, dünneren Plattenabschnitte 17a, 17b, die mit Abstand zueinander angeordnet sind, umfasst. Die Haltewirkung ergibt sich dadurch, dass sich auch der oberste Ring 11 des Dübels aufspreizt, wenn der Spreizkörper 3 fest nach oben gezogen wird. diese Wirkung reicht aus, um einen Halt in der oberen Platte 17a zu erzielen.

Bei den in Fig. 15 dargestellten Ausführungsbeispiel handelt es sich ebenfalls um einen Dübel ohne Verdrehsicherung. Hier sind die seitlichen Führungen 9, die durch Vorsprünge 10 gebildet werden, etwas einfacher ausgebildet als bei den vorher gezeigten Dübeln.

Die Fig. 16 zeigt ein Scharnier als Beispiel für einen Beschlagteil, dessen Befestigungsplatte 19 mit zwei erfindungsgemäßen Dübeln versehen ist, die über die Schrauben 4 bereits vormontiert sind. Damit können die relativ kleinen Dübel nicht verlorengehen und sie lassen sich lagesicher in vormontierte Bohrungen 16 einsetzen.

Dasselbe gilt auch für die folgenden Ausführungsbeispiele. In Fig. 17 ist eine Grundplatte für ein Scharnier gezeigt, in Fig. 18 ein Frontwandhalter, in Fig. 19 eine Blendenstabilisierung, welche jeweils zwei Ausführungsbeispiele von erfindungsgemäßen Dübeln vormontiert haben. In den Figuren 20a, 20b, 21a, 21b sowie 22a und 22b sind verschiedene Versionen von Dübeln in verschiedenen Stellungen zum Befestigen einer Anschlussplatte 20 eines Scharniers gezeigt. Die Figuren 20a, 20b zeigen einen Dübel mit Verdrehsicherung 8 im noch nicht gespannten Zustand. Figuren 21a, 21b zeigen eine Version ohne Verdrehsicherung, ebenfalls im nicht gespannten Zustand aber bei bereits eingesetzter Schraube 4.

In Fig. 21b sieht man in der oberen Öffnung der Befestigungsplatte 20 des Scharniers, dass diese Öffnung nicht-rotationssymmetrisch ausgebildet ist. In die Ausbuchtungen 21a können, wie Fig. 20b zeigt, die Verdrehsicherungen 8 eingreifen und damit verhindern, dass beim Anziehen der Schraube 4 der Dübel mitgedreht wird.

In den Figuren 22a, 22b sieht man im Wesentlichen dieselben Darstellungen wie in den Figuren 21a, 21b, jedoch bei angezogener Schraube 4 und damit gespreiztem Dübel, der damit fest in der Bohrung 16 der Platte 17 hält.

## Patentansprüche

1. Dübel zum Befestigen von Beschlagteilen von Möbeln, mit
- einer Dübelhülse (1),
- mindestens einer von der Dübelhülse (1) gesonderten Befestigungskralle (2),
- einem axial in der Dübelhülse (1) bewegbaren Spreizelement (3) zum radialen Aufspreizen der mindestens einen Befestigungskralle (2) und der Dübelhülse (1),
wobei die Dübelhülse (1) - vorzugsweise im Inneren - eine Führung (9) aufweist, die einen Halteabschnitt (2a) der Befestigungskralle (2) seitlich führt und dass Rastmittel (12, 13) vorgesehen sind, die die in die Führung (9) eingesetzte Befestigungskralle (2) - vorzugweise mit Spiel - an der Dübelhülse (1) halten, **dadurch gekennzeichnet, dass** die Rastmittel (12, 13) einen von der Dübelhülse (1) nach innen abstehenden Rastzapfen (12) sowie eine korrespondierende Rastöffnung (13) im Halteabschnitt (2a) der Befestigungskralle (2) aufweist, in die der Rastzapfen (12) bei in die Dübelhülse (1) eingesetzter Befestigungskralle (2) - vorzugsweise mit Spiel - eingreift.

2. Dübel nach Anspruch 1, **dadurch gekennzeichnet, dass** mindestens zwei gesonderte, vorzugweise vier paarweise gegenüberliegende Befestigungskrallen (2) vorgesehen sind, wobei die Dübelhülse für jede Befestigungskralle (2) eine eigene, gesonderte Führung sowie eigene, gesonderte Rastmittel (12, 13) aufweist.

3. Dübel nach Anspruch 1 oder 2, **dadurch gekennzeichnet, dass** die Dübelhülse (1) im Bereich der Oberseite (1a) einen durchgehenden Ring (11) aufweist, von dem aus sich - vorzugsweise außen mit Haltevorsprüngen (5) versehene - Haltelappen (7) in der Längsrichtung des Dübels erstrecken, wobei zwischen den Haltelappen (7) jeweils ein Spalt (6) ausgebildet ist.

4. Dübel nach einem der Ansprüche 1 bis 3, **dadurch gekennzeichnet, dass** das Spreizelement (3) mit mindestens einer Befestigungskralle (2), vorzugsweise mit allen Befestigungskrallen (2), verbindbar ist.

5. Dübel nach Anspruch 4, **dadurch gekennzeichnet, dass** das Spreizelement (3) eine Kegelfläche (2b) aufweist, die innen an den Befestigungskrallen (2) anliegt und über die die Befestigungskrallen (2) radial aufspreizbar sind.

6. Dübel nach Anspruch 4 oder Anspruch 5, **dadurch gekennzeichnet, dass** zwischen dem Spreizelement (3) und den Befestigungskrallen (2) eine Rastverbindung (14, 13) vorgesehen ist.

7. Dübel nach Anspruch 6, **dadurch gekennzeichnet, dass** die Rastverbindung am Spreizelement (3) radial abstehende Rastvorsprünge (14) umfasst, die jeweils in Rastöffnungen (13) in den Halteabschnitten (2a) der Befestigungskrallen (2) eingreifen.

8. Dübel nach Anspruch 1 und Anspruch 7, **dadurch gekennzeichnet, dass** für jede Befestigungskralle (2) ein Rastzapfen (12) der Dübelhülse (1) und ein Rastvorsprung (14) des Spreizelementes (3) an der Befestigungskralle (2) in dieselbe Rastöffnung (13) im Halteabschnitt (2a) der Befestigungskralle (2) einrasten.

9. Dübel nach einem der Ansprüche 1 bis 8, **dadurch gekennzeichnet, dass** die Länge des Dübels kleiner als der Durchmesser, vorzugsweise kleiner als 70% des Durchmessers ist, wobei der nicht gespreizte Dübel vorzugsweise einen Durchmesser von 8 mm bis 15 mm aufweist und/oder wobei der nicht gespreizte Dübel eine in Einsetzrichtung gemessene - Länge von vorzugsweise 5 mm bis 8 mm aufweist.

10. Beschlagteil für ein Möbel, insbesondere eine Türe, Klappe oder Schublade, mit mindestens einem vormontierten Dübel nach einem der Ansprüche 1 bis 9.

11. Beschlagteil nach Anspruch 10, **gekennzeichnet durch** mindestens ein Zugelement, welches Spreizelemente des Dübels zum Beschlagteil hin zieht, wobei das Zugelement vorzugsweise eine Schraube ist, die in ein Gewinde im Spreizelement eingreift.

12. Möbel, insbesondere Küchenschrank, mit wenigstens einem Beschlagteil nach einem der Ansprüche 10 oder 11.

13. Verfahren zum Herstellen eines Dübels, mit
- einer Dübelhülse (1),
- mindestens einer von der Dübelhülse (1) gesonderten Befestigungskralle (2),
- einem axial in der Dübelhülse (1) bewegbaren Spreizelement (3) zum radialen Aufspreizen der mindestens einen Befestigungskralle (2) und der Dübelhülse (1),
eines Dübels nach einem der Ansprüche 1 bis 9 mit den folgenden Schritten:
- Einsetzen der zumindest einen Befestigungskralle (2) in die Dübelhülse (1),
- Verrasten der zumindest einen Befestigungskralle (1) mit der Dübelhülse (1),
- Einsetzen des Spreizelementes (3) in die mit der zumindest einen Befestigungskralle (2) versehenen Dübelhülse (1),
- Verrasten des Spreizelements (3) mit mindestens einer Befestigungskralle (2).

14. Verfahren nach Anspruch 13 zum Herstellen eines Dübels mit zwei oder mehreren Befestigungskrallen (2), **dadurch gekennzeichnet, dass** die Befestigungskrallen (2) zeitlich hintereinander in die Dübelhülse (1) eingesetzt und verrastet werden.

## Claims

1. A dowel for fastening fitments of articles of furniture comprising
- a dowel sleeve (1),
- at least one fastening claw (2) separate from the dowel sleeve (1), and
- a spreading element (3) which is moveable axially in the dowel sleeve (1) for radially spreading the at least one fastening claw (2) and the dowel sleeve (1),
wherein the dowel sleeve (1) - preferably in the inside - has a guide (9) which laterally guides a holding portion (2a) of the fastening claw (2) and there are provided latching means (12, 13) which hold the fastening claw (2) which is inserted into the guide (9) - preferably with play - on the dowel sleeve (1), **characterised in that** the latching means (12, 13) have a latching pin (12) protruding inwardly from the dowel sleeve (1) as well as a corresponding latching opening (13) in the holding portion (2a) of the fastening claw (2), into which the latching pin (12) engages when the fastening claw (2) is inserted into the dowel sleeve (1) - preferably with play.

2. A dowel as set forth in claim 1 **characterised in that** there are provided at least two separate, preferably four pair-wise oppositely disposed fastening claws (2), wherein for each fastening claw (2) the dowel sleeve has a dedicated separate guide as well as dedicated separate latching means (12, 13).

3. A dowel as set forth in claim 1 or 2 **characterised in that** in the region of the top side (1a) the dowel sleeve (1) has a continuous ring (11), from which holding tabs (7) which are preferably provided externally with holding projections (5) extend in the longitudinal direction of the dowel, wherein a respective gap (6) is provided between the holding tabs (7).

4. A dowel as set forth in one of claims 1 to 3 **characterised in that** the spreading element (3) can be connected to at least one fastening claw (2), preferably all fastening claws (2).

5. A dowel as set forth in claim 4 **characterised in that** the spreading element (3) has a taper surface (2b) which bears at the inside against the fastening claws (2) and by way of which the fastening claws (2) are radially spreadable.

6. A dowel as set forth in claim 4 or 5 **characterised in that** a latching connection (14, 13) is provided between the spreading element (3) and the fastening claws (2).

7. A dowel as set forth in claim 6 **characterised in that** the latching connection includes on the spreading element (3) radially projecting latching projections (14) which respectively engage into latching openings (13) in the holding portions (2a) of the fastening claws (2).

8. A dowel as set forth in claim 1 and claim 7 **characterised in that** for each fastening claw (2) a latching pin (12) of the dowel sleeve (1) and a latching projection (14) of the spreading element (3) on the fastening claw (2) latch into the same latching opening (13) in the holding portion (2a) of the fastening claw (2).

9. A dowel as set forth in one of claims 1 to 8 **characterised in that** the length of dowel is smaller than the diameter, preferably less than 70% of the diameter, wherein the non-spread dowel preferably is of a diameter of 8 mm to 15 mm, and/or wherein the non-spread dowel is of a length - measured in the direction of insertion - of preferably 5 mm to 8 mm.

10. A fitment for an article of furniture, in particular a door, flap or drawer, comprising at least one pre-fitted dowel as set forth in one of claims 1 to 9.

11. A fitment as set forth in claim 10 **characterised by** at least one pulling element which pulls spreading elements of the dowel towards the fitment, wherein the pulling element preferably is a screw engaging into a thread in the spreading element.

12. An article of furniture, in particular a kitchen cabinet, having at least one fitment as set forth in one of claims 10 or 11.

13. A method of producing a dowel comprising
- a dowel sleeve (1),
- at least one fastening claw (2) separate from the dowel sleeve (1), and
- a spreading element (3) which is moveable axially in the dowel sleeve (1) for radially spreading the at least one fastening claw (2) and the dowel sleeve (1),
of a dowel as set forth in one of claims 1 to 9 with following steps:
- inserting the at least one fastening claw (2) into the dowel sleeve (1),
- latching the at least one fastening claw (2) with the dowel sleeve (1),
- inserting the spreading element (3) into the dowel sleeve (1) provided with the at least one fastening claw (2), and
- latching the spreading element (3) with at least one fastening claw (2).

14. A method as set forth in claim 13 for producing a dowel having two or more fastening claws (2), **characterised in that** the fastening claws (2) are successively in respect of time inserted into the dowel sleeve (1) and latched.

## Revendications

1. Cheville destinée à fixer des pièces de ferrure de meubles, dotée
- d'une gaine de cheville (1),
- d'au moins une griffe de fixation (2) séparée de la gaine de cheville (1),
- d'un élément d'expansion (3) déplaçable axialement dans la gaine de cheville (2), pour l'expansion radiale de l'au moins une griffe de fixation (2) et de la gaine de cheville (1),
dans laquelle la gaine de cheville (1) comporte un guidage (9), de préférence à l'intérieur, lequel guide latéralement une section de maintien (2a) de la griffe de fixation (2) et des moyens d'encliquetage (12, 13) sont prévus, lesquels maintiennent sur la gaine de cheville (1) la griffe de fixation (2) insérée dans le guidage (9), de préférence avec du jeu, **caractérisée en ce que** les moyens d'encliquetage (12, 13) comportent un tenon d'encliquetage (12) saillant vers l'intérieur depuis la gaine de cheville (1) ainsi qu'un orifice d'encliquetage (13) correspondant dans la section de maintien (2a) de la griffe de fixation (2), dans lequel le tenon d'encliquetage (12) s'engage lorsque la griffe de fixation (2) est insérée dans la gaine de cheville (1), de préférence avec du jeu.

2. Cheville selon la revendication 1, **caractérisée en ce qu'**au moins deux, de préférence quatre, griffes de fixation (2) séparées opposées par paires sont prévues, dans laquelle la gaine de cheville possède pour chaque griffe de fixation (2) un guide séparé propre ainsi qu'un moyen d'encliquetage séparé propre (12, 13).

3. Cheville selon la revendication 1 ou 2, **caractérisée en ce que** la gaine de cheville (1) comporte, dans la zone de la face supérieure (1a), un anneau continu (11) à partir duquel des pattes de maintien (7) - de préférence pourvues à l'extérieur de saillies de maintien (5) - s'étendent dans la direction longitudinale de la cheville, une fente (6) étant respectivement réalisée entre chacune des pattes de maintien (7).

4. Cheville selon l'une des revendications 1 à 3, **caractérisée en ce que** l'élément d'expansion (3) peut être relié à au moins une griffe de fixation (2), de préférence à toutes les griffes de fixation (2).

5. Cheville selon la revendication 4, **caractérisée en ce que** l'élément d'expansion (3) présente une surface conique (2b) qui appuie à l'intérieur sur les griffes de fixation (2) et par le biais de laquelle les griffes de fixation (2) peuvent subir une expansion radiale.

6. Cheville selon la revendication 4 ou la revendication 5, **caractérisée en ce qu'**une liaison par encliquetage (14, 13) est prévue entre l'élément d'expansion (3) et les griffes de fixation (2).

7. Cheville selon la revendication 6, **caractérisée en ce que** la liaison par encliquetage sur l'élément d'expansion (3) comprend des saillies d'encliquetage (14) saillant radialement, qui s'engagent chacune dans des orifices d'encliquetage (13) dans les sections de maintien (2a) des griffes de fixation (2).

8. Cheville selon la revendication 1 et la revendication 7, **caractérisée en ce que**, pour chaque griffe de fixation (2), un tenon d'encliquetage (12) de la gaine de cheville (1) et une saillie d'encliquetage (14) de l'élément d'expansion (3) sur la griffe de fixation (2) s'engagent dans le même orifice d'encliquetage (13) dans la section de maintien (2a) de la griffe de fixation (2).

9. Cheville selon l'une des revendications 1 à 8, **caractérisée en ce que** la longueur de la cheville est inférieure au diamètre, de préférence inférieure à 70 % du diamètre, dans laquelle la cheville non expansée comporte de préférence un diamètre de 8 mm à 15 mm et/ou la cheville non expansée comporte de préférence une longueur - mesurée dans la direction de l'insertion - de 5 mm à 8 mm.

10. Pièce de ferrure pour meuble, en particulier pour porte, trappe ou tiroir, dotée d'au moins une cheville prémontée selon l'une des revendications 1 à 9.

11. Pièce de ferrure selon la revendication 10, **caractérisée par** au moins un élément de traction, lequel tire les éléments d'expansion de la cheville vers la pièce de ferrure, dans laquelle l'élément de traction est de préférence une vis, laquelle s'engage dans un filetage dans l'élément d'expansion.

12. Meuble, en particulier placard de cuisine, doté d'au moins une pièce de ferrure selon l'une des revendications 10 à 11.

13. Procédé de fabrication d'une cheville dotée
- d'une gaine de cheville (1),
- d'au moins une griffe de fixation (2) séparée de la gaine de cheville (1),
- d'un élément d'expansion (3) déplaçable dans la gaine de cheville (2) destiné à l'expansion radiale de l'au moins une griffe de fixation (2) et de la gaine de cheville (1)
d'une cheville selon l'une des revendications 1 à 9 avec les étapes suivantes :
- insertion de l'au moins une griffe de fixation (2) dans la gaine de cheville (1),
- emboîtement de l'au moins une griffe de fixation (1) avec la gaine de cheville (1),
- insertion de l'élément d'expansion (3) dans la gaine de cheville (1) prévue dotée de l'au moins une griffe de fixation (2),
- emboîtement de l'élément d'expansion (3) avec l'au moins une griffe de fixation (2).

14. Procédé selon la revendication 13 pour la fabrication d'une cheville dotée de deux ou plusieurs griffes de fixation (2), **caractérisé en ce que** les griffes de fixation (2) sont insérées et emboîtées dans la gaine de cheville (1) chronologiquement l'une après l'autre.
